# EUROPÄISCHE PATENTSCHRIFT

(11) **EP 1 124 341 B1**
(45) Veröffentlichungstag und Bekanntmachung des Hinweises auf die Patenterteilung: **30.04.2008**
(21) Anmeldenummer: 01200432.1
(22) Anmeldetag: 06.02.2001
(51) Int. Cl.: H04B 7/26, H04J 3/06

(54) **Steuereinheit für ein Endgerät eines digitalen schnurlosen Telekommunikationssystems sowie Verfahren für eine solche Steuereinheit**
Control unit for a terminal of a digital cordless communications system and method therefor
Unité de contrôle pour terminal d'un système de communications numérique sans fil et méthode associée

(30) Priorität: 10.02.2000 DE 10005911
(43) Veröffentlichungstag der Anmeldung: 16.08.2001
(73) Patentinhaber: Philips Intellectual Property & Standards GmbH, 20099 Hamburg (DE); DSP Group Switzerland AG, 8045 Zürich (CH)
(72) Erfinder: Huber, Holger, Habsburgerallee 11, 52064 Aachen (DE); Stobart, Christopher, Habsburgerallee 11, 52064 Aachen (DE)
(74) Vertreter: van der Veer, Johannis Leendert

(56) Entgegenhaltungen:
- EP-A- 0 401 763
- WO-A-99/59247
- DE-A- 19 747 275
- US-A- 5 872 821
- US-A- 5 978 688

## Beschreibung

Die Erfindung betrifft eine Steuereinheit für ein Endgerät eines digitalen, schnurlosen Telekommunikationssystems zum Liefern von Steuersignalen an weitere Einheiten des Endgeräts sowie ein Verfahren für eine solche Steuereinheit.

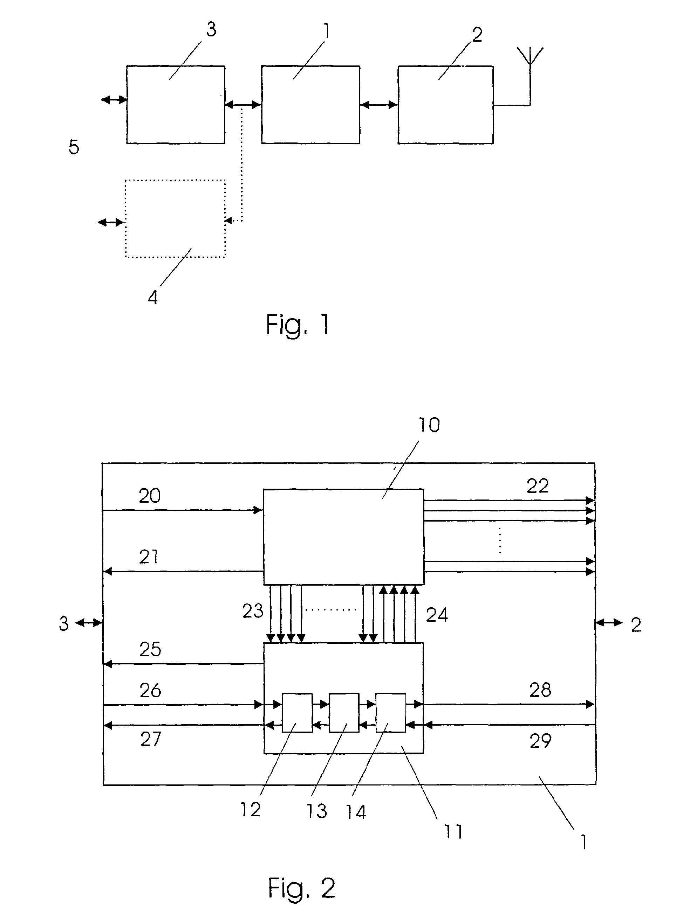

Die Kommunikation zwischen den Endgeräten eines digitalen schnurlosen Telekommunikationssystems, insbesondere zwischen Handgeräten und Basisstationen, findet über eine mit einer Antenne verbundene Funksteuereinheit in jedem der Endgeräte statt. Der typische Aufbau eines Endgerätes ist in Figur 1 dargestellt. Die Funksteuereinheit 2 wird dabei von einer Steuereinrichtung 1 (BMC: Burst Mode Controller) gesteuert. Die Steuereinrichtung 1 ist verantwortlich für die zeitkritische Verarbeitung der zu übertragenden und der empfangenen Daten. Außerdem gibt sie Steuersignale auf die Steuerleitungen der Funksteuereinheit 2 aus. Die Steuereinrichtung 1 wird ihrerseits von einem Mikrocontroller 3 gesteuert, der Protokollfunktionen und andere weniger zeitkritische Funktionen durchführt. Zusätzlich kann für einige Systeme, beispielsweise für solche mit Übertragung von Audiodaten, eine weitere Einheit 4 vorgesehen sein, die eine digitale Signalverarbeitung der zu übertragenden bzw. der empfangenen Daten durchführt. Der Mikrocontroller 3 und die Einheit für die digitale Signalverarbeitung 4 haben schließlich Zugang zu den Anwendungen 5 des Endgerätes.

Ein detaillierterer Aufbau der Steuereinrichtung 1 ist in Figur 2 dargestellt.

Die Hauptbestandteile der Steuereinrichtung 1 sind eine Steuereinheit 10 und eine Datenverarbeitungseinheit 11. Die Steuereinheit 10 empfängt Befehle 20 von dem Mikrocontroller 3, entsprechend denen sie die Ausgabe von Steuersignalen 22 auf Steuerleitungen zur Funksteuereinheit 2 steuert und Steuersignale 23 für die Datenverarbeitungseinheit 11 generiert und ausgibt. Von der Datenverarbeitungseinheit 11 erhält die Steuereinheit 10 zudem Feedback-Informationen 24, die ebenfalls das Steuerverhalten der Steuereinheit 10 beeinflussen können. Die Datenverarbeitungseinheit 11 wird ihrerseits eingesetzt, um bestimmte Funktionen auf die empfangenen 27,29 und die zu versendenden 26,28 Datenbits anzuwenden, wie Verschlüsseln (encryption, scrambling) 12,14 oder Generieren einer Prüfsumme (CRC: Cyclic redundancy codes) 13. In einem Endgerät eines digitalen, schnurlosen Telekommunikationssystems wie beispielsweise DECT ist es dabei erforderlich, die zu übertragenden und die empfangenen Daten in Echtzeit zu verarbeiten. Sowohl die Steuereinheit 10 als auch die Datenverarbeitungseinheit 11 können Statusinformationen 21,25 an den Mikrocontroller 3 liefern.

Die Steuereinheit einer Steuereinrichtung ist typischerweise als Hardware-Automatismus implementiert. Dadurch ergeben sich Probleme, sobald eine Änderung in der Ausgabe der Steuersignale erforderlich wird. So erfordert jede Änderung in dem Format der Datenpakete einen Neuentwurf der Steuereinheit, selbst wenn die gleichen Datenverarbeitungsfunktionen eingesetzt werden sollen und lediglich eine andere Bit-Taktung vorgesehen ist. Ebenso erfordert ein Hinzufügen oder ein Entfernen von Datenverarbeitungsfunktionen sowie eine Änderung in der Spezifizierung der Funkschnittstelle oder der Taktung für die Funk-Steuersignale einen Neuentwurf der Steuereinheit. Damit ist auch die Hardware einer Steuereinheit für einen bestimmten Telekommunikationsstandard, wie beispielsweise DECT, nur mit erheblichem Anpassungsaufwand für andere Telekommunikationssysteme, wie beispielsweise das US-amerikanische ISM-Band System, verwendbar.

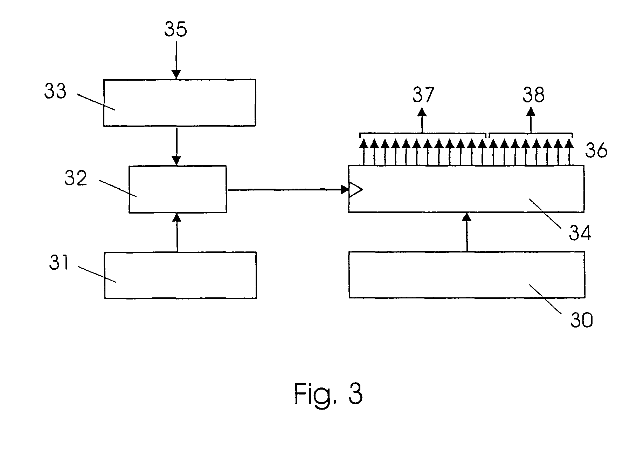

Aus dem GSM ist dagegen eine Basisband-Steuereinheit bekannt, die auf den in der Hardware implementierten Automatismus für die Ausgabe von Steuersignalen verzichtet. Die statt dessen eingesetzte Einheit wird in Figur 3 veranschaulicht: Ein Mikrocontroller schreibt Werte für ein Steuersignale enthaltendes Ereignis in ein Steuersignalregister 30 und die Werte für einen Zeitpunkt, zu dem die Steuersignale des Ereignisses auf die mit dem Steuersignalregister 30 verbundenen Steuerleitungen 36 ausgegeben werden soll, in ein Zeitpunktregister 31. In einem Vergleicher 32 wird der Zeitpunkt aus dem Zeitpunktregister 31 ständig verglichen mit der von einem Zeitgeber 32 vorgegebenen Zeit. Der Zeitgeber 32 wird dabei von einem lokalen Taktgenerator 35 gesteuert. Bei Übereinstimmung wird das Ereignis aus dem Steuersignalregister 30 über ein Ausgaberegister 34 auf die Steuerleitungen 36 ausgegeben. Die Steuerleitungen können beispielsweise eine Funksteuereinheit mit Steuersignalen 38 versorgen und außerdem einer Datenverarbeitungseinheit Steuersignale 37 zuführen.

Die Zeitvorgaben und die Belegung der Steuerleitungen sind somit vollkommen frei wählbar, da die Aufgaben des Hardwareautomatismus der Software übertragen wurden. Durch den Einsatz der Register ist es dabei auch nicht erforderlich, dass die Software Bit für Bit die Aktionen des Hardwareautomatismus nachbildet.

Ein Vorteil ergibt sich hieraus beispielsweise, wenn sich das Format von Datenpaketen ändert. Da die Zeitpunkte für die Weiterleitung von Steuersignalen von der Steuereinheit an die Datenverarbeitungseinheit von der Software vorgegeben werden, kann einer Formatänderung statt durch einen Neuentwurf der Hardware durch eine weit weniger aufwendige Softwaremodifikation begegnet werden. Auch das Hinzufügen oder das Entfernen von Funktionen der Datenverarbeitungseinheit kann durch einfache Änderungen in der Zuweisung der einzelnen Bits der Register zu den Steuerleitungen von der Steuereinheit zu der Datenverarbeitungseinheit berücksichtigt werden. Neu zugewiesene Bedeutungsinhalte und geänderte Ausgabezeiten für die Steuerleitungen können somit durch reine Softwaremodifikation gehandhabt werden. Der Bedeutungsinhalt, die Taktung und die Pegel der Funk-Steuersignale sind ebenfalls vollständig von der Software vorgebbar, so dass auch an der Funkschnittstelle Änderungen möglich werden, ohne dass direkt ein Neuentwurf der Hardware erforderlich würde.

Ein entsprechender Vorschlag für ein GSM-Mobilfunkgerät ist beispielsweise in der Druckschrift DE 197 47 275 A1 zu finden.

Die aus der GSM-Anwendung bekannten Steuereinheiten lassen sich jedoch nicht ohne weiteres auf Anwendungen im digitalen, schnurlosen Bereich übertragen. So weisen Anwendungen wie DECT mit 1152 kbit/s eine wesentlich höhere Bitrate als das GSM mit 270 kbit/s auf. Außerdem ist bei DECT die Unterstützung mehrerer Verbindungen gleichzeitig erforderlich. Das führt zu einem erheblichem Softwareverarbeitungsaufwand und zu Echtzeit-Anforderungen, die zur Zeit praktisch nicht erfüllbar sind. So ist im ungünstigsten Fall eine Reaktionszeit innerhalb der Zeit eines Bits, also innerhalb von 0,87µs erforderlich. Aufgrund der Forderung nach einer geringen Verzögerung bei der Verarbeitung in schnurlosen Systemen, die an öffentliche Fernsprechnetze (PSTN: Public Switched Telephone Nerwork) angeschlossen sind, ist andererseits eine "off-line" Verarbeitung der empfangenen Daten, also eine Verarbeitung nicht in Echtzeit, nicht möglich. Schließlich müssen Verarbeitungsschritte wie Entschlüsseln und Kontrollieren einer Prüfsumme etc. unmittelbar und mit der Taktung der empfangenen Signaldaten auf die empfangenen Daten angewandt werden. Aus diesem Grund ist auch der für das GSM vorgesehene Einsatz einer von der lokalen Systemzeit abhängigen Referenzzeit nicht möglich.

Der Erfindung liegt die Aufgabe zugrunde, eine verbesserte, flexible und energiesparende Steuereinheit für ein Endgerät eines digitalen, schnurlosen Telekommunikationssystems zum Liefern von Steuersignalen an weitere Einheiten des Endgeräts zur Verfügung zu stellen. Der Erfindung liegt ebenso die Aufgabe zugrunde, ein Verfahren zur Verfügung zu stellen, das den Einsatz einer verbesserten, flexiblen und energiesparenden Steuereinheit für ein Endgerät eines schnurlosen Telekommunikationssystems ermöglicht.

Die Aufgabe wird erfindungsgemäß zum einen gelöst durch eine Steuereinheit mit den Merkmalen aus Anspruch 1.

Zum anderen wird die Aufgabe gelöst durch ein Verfahren gemäß Anspruch 9.

Die erfindungsgemäße Steuereinheit und das erfindungsgemäße Verfahren basieren auf einer Softwaresteuerung mit ausreichender Hardwareunterstützung, wodurch eine große Flexibilität erreicht wird, gleichzeitig aber überhöhte Anforderungen an die Mikrocontrollerleistung vermieden werden.

Die Erfindung erlaubt Anpassungen an geänderte Rahmenbedingungen ohne einen Neuentwurf der Hardware zu erfordern. So ist es auf einfache Weise möglich, eine Anpassung an Anwendungen verschiedener Systeme vorzunehmen, indem die von dem Mikrocontroller an die Registerarrays gelieferten Ereignisse und Zeitpunkte entsprechend angepasst werden. Gleichermaßen kann auf Änderungen in an die Steuerleitungen angeschlossenen Einheiten, wie in einer Funkschnittstelle oder einer Datenverarbeitungseinheit, reagiert werden, beispielsweise, wenn Steuerleitungen anders belegt oder die Taktung und der Signalpegel an der Funkschnittstelle geändert werden sollen.

Trotz der erhöhten Flexibilität kann die Erfindung durch den Einsatz der Registerarrays auch in Systemen mit hohen Datenraten wie DECT ohne erhebliche Softwarebeanspruchung eingesetzt werden, da der Mikrocontroller mehrere Befehle gleichzeitig laden kann und damit nicht in der Zeitspanne eines einzigen Bits reagieren muss, so dass die Echtzeit-anforderungen leichter realisiert werden können.

Bevorzugte Ausgestaltungen der erfindungsgemäßen Steuereinheit und des erfindungsgemäßen Verfahrens gehen aus den Unteransprüchen hervor.

Die erfindungsgemäße Steuereinheit und das erfindungsgemäße Verfahren werden nun anhand eines Ausführungsbeispiels unter Bezugnahme auf eine Zeichnung näher erläutert. Dabei zeigt
- Fig. 1: eine Übersicht über die Einbindung einer eine Steuereinheit umfassenden Steuereinrichtung in einem Endgerät,
- Fig. 2: schematisch den Aufbau einer Steuereinrichtung mit Steuereinheit,
- Fig. 3: schematisch eine aus GSM-Systemen bekannte Steuereinheit, und
- Fig. 4: schematisch eine Steuereinheit einer Steuereinrichtung gemäß Erfindung.

Die Figuren 1 bis 3 wurden bereits zum Stand der Technik beschrieben.

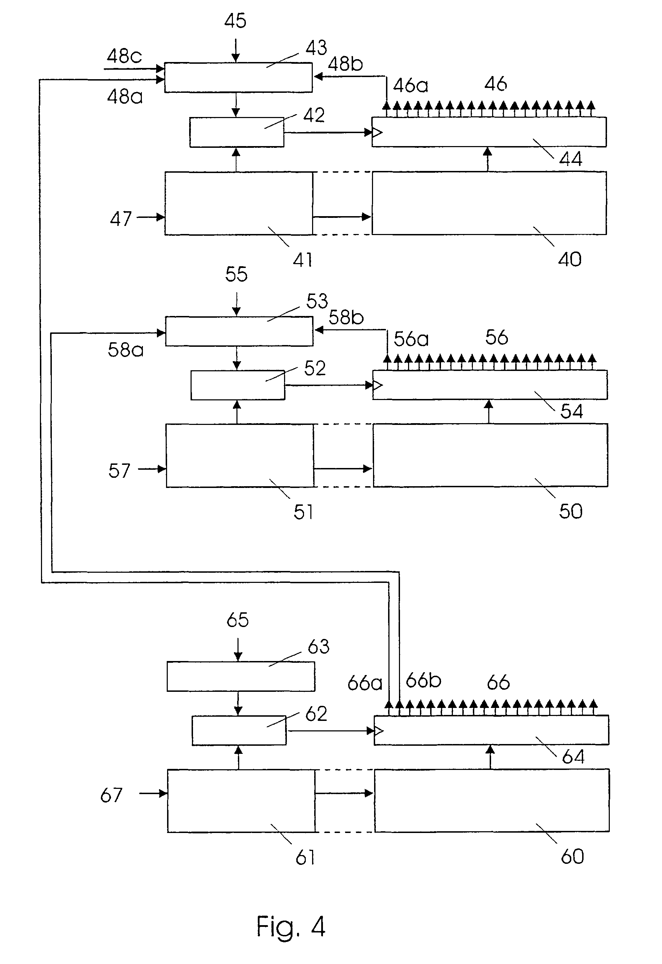

In Figur 4 ist der Aufbau einer gemäß Figur 2 in eine Steuereinrichtung 1 integrierten Steuereinheit 10 schematisch dargestellt, wobei die Steuereinrichtung 1 ihrerseits entsprechend Figur 1 einen Bestandteil eines Endgerätes bildet.

Die Steuereinheit ist in drei Unterbereiche aufgeteilt, einen Haupt-Steuerbereich, einen Empfangs-Steuerbereich und einen Sende-Steuerbereich, die alle eine ähnliche Anordnung aufweisen.

Jeder der drei Unterbereiche weist einen Vergleicher 42,52,62 mit steuerndem Zugriff auf ein Ausgaberegister 44,54,64 auf. Die Eingänge der Vergleicher 42,52,62 sind dabei jeweils mit einem Zeitgeber 43,53,63 und einem Zeitpunkte-Registerarray 41,51,61 verbunden. Die Eingänge der Ausgaberegister 44,54,64 sind jeweils mit einem Steuersignal-Registerarray 40,50,60 verbunden und die Ausgänge 46,56,66 jeweils mit Steuerleitungen. Ein in Figur 4 nicht dargestellter Mikrocontroller hat Zugang sowohl zu dem Zeitpunkte-41,51,61 als auch zu dem Steuersignal-Registerarray 40,50,60.

Der Zeitgeber 63 des Haupt-Steuerbereichs wird von einer lokalen Taktung 65 gesteuert. Die Ausgänge 66,66a,66b des Ausgaberegisters 64 sind über Steuerleitungen einerseits mit einer Funksteuereinheit und mit Elementen einer Datenverarbeitungseinheit verbunden, andererseits jeweils mit einem Eingang 48a bzw. 58a des Zeitgebers 43 des Empfangs-Steuerbereichs und des Zeitgebers 53 des Sende-Steuerbereichs.

Der Zeitgeber 43 des Empfangs-Steuerbereichs weist neben dem mit dem Ausgaberegister 64 des Haupt-Steuerbereichs verbunden Eingang 48a drei weitere Eingänge 45,48b,48c auf. Über einen Eingang 45 erhält er eine aus den Empfangsdaten gewonnene Taktung. Ein weiterer Eingang 48c ist mit einer nicht dargestellten Paketdetektionseinheit verbunden. Schließlich ist noch ein Eingang 48b des Zeitgebers 43 mit einem der Ausgänge 46a des Ausgaberegisters 44 des Empfangs-Steuerbereichs verbunden. Die restlichen Ausgänge 46 des Ausgaberegisters 44 sind mit den Elementen der Datenverarbeitungseinheit verbunden, die die empfangenen Datenpakete in Echtzeit verarbeiten.

Der Zeitgeber 53 des Sende-Steuerbereichs wird wie der Zeitgeber 63 des Haupt-Steuerbereichs von einer lokalen Taktung gesteuert 55. Ein weiterer Eingang 58b des Zeitgebers 53 des Sende-Steuerbereichs ist mit einem der Ausgänge 56a des Ausgaberegisters 54 des Sende-Steuerbereichs verbunden. Die übrigen Ausgänge 56 des Ausgaberegisters 54 sind mit den Elementen der Datenverarbeitungseinheit verbunden, die die zu versendenden Datenpakete verarbeiten.

Die Zeitgeber 43, 53, 63 der drei Unterbereiche bestehen jeweils aus einem Bitzähler, dessen Länge beispielsweise 11520 beträgt. Ebenso möglich ist eine Kombination aus einem Bitzähler mit einer Länge von 480 und einem Zeitschlitzzähler mit einer Länge von 24 für einen Zeitgeber, bei der der Bitzähler die Bits innerhalb eines Zeitschlitzes zählt und bei der jeweils mit dem letzten Bit eines Zeitschlitzes eines Rahmens der Zeitschlitzzähler inkrementiert wird. Demgegenüber ergibt sich bei der Verwendung eines reinen Bitzählers jedoch eine größere Flexibilität bei einer Verarbeitung variabler Zeitschlitzstrukturen, die in einigen Systemen auftreten können, etwa wenn die verschiedenen Zeitschlitze innerhalb eines Rahmens verschiedene Längen aufweisen. Außerdem wird durch den Einsatz eines Bitzählers die gleichzeitige Berücksichtigung mehrerer Taktvorgaben erleichtert, da eine zweite Taktvorgabe einfach als Takt-Offset in dem Bitzähler behandelt werden kann. Wird ein Zeitschlitzzähler eingesetzt, so sind in diesem Fall für die Offset-Berechnungen zwei Zähler erforderlich, und die resultierenden Overflow-Überwachungen etc. erhöhen den Softwareaufwand.

Die drei Unterbereiche aus Figur 4 arbeiten jeweils ähnlich wie die Steuereinheit aus Figur 3: Ein Vergleicher vergleicht eine vorgegebene Systemzeit mit einem Zeitpunkt aus einem Register und bewirkt in Abhängigkeit davon die Ausgabe von Steuersignalen aus Ereignissen, die in einem weiteren Register gespeichert sind. Durch die Aufteilung der Steuereinheit 10 in drei Unterbereiche und durch die Verwendung von Registerarrays 41,51,61 bzw. 40,50,60 anstelle einzelner Register ergeben sich jedoch bedeutsame Unterschiede.

Dadurch, dass jeweils statt eines Registers ein Registerarray 41,51,61 bzw. 40,50,60 für die Zeitpunkte und für die Ereignisse vorgesehen sind, kann der Mikrocontroller mehrere Befehle bestehend aus einem Ereignis und dem diesem zugeordneten Zeitpunkt auf einmal laden. Die Hardware greift auf die Register der Arrays 41,51,61 und 40,50,60 zyklisch zu. Ein Zeiger 47,57,67 gibt dabei an, welches gerade der aktuelle Zeitpunkt und das aktuelle Steuersignal sind. Der Zeiger 47,57,67 wird vorzugsweise auch durch den Mikrocontroller gesteuert. Jedes Mal, wenn der aktuelle Zeitpunkt aus dem Zeitpunkte-Registerarray 41,51,61 mit der von dem Zeitgeber 43,53,63 gelieferten Zeit übereinstimmt, werden die in dem aktuellen Ereignis enthaltenen Steuersignale über das Ausgaberegister 44,54,64 auf die Steuerleitungen ausgegeben, der Zeiger 47,57,67 wird weitergesetzt, und der nächste Zeitpunkt und das nächste Ereignis stehen bereit. Der Mikrocontroller braucht also nicht mehr innerhalb der Zeit eines einzigen Bits mit neuen Daten zu reagieren, was eine Verarbeitung in Echtzeit selbst bei hohen Datenraten ermöglicht.

Weitere Vorteile ergeben sich durch den Einsatz der drei Unterbereichen. Normalerweise ändert sich von einem Zeitpunkt zum nächsten in den zugeordneten Ereignissen nur das Steuersignal für eine oder zwei der Vielzahl an Steuerleitungen. Außerdem treten Steuersignale, die sich auf die Funksteuerung beziehen, gewöhnlich nicht während eines Zeitschlitzes auf, also während gerade die Verarbeitung eines Datenpakets in Gang ist. Durch die Aufteilung der Steuereinheit in drei Unterbereiche können auch die Ereignisse aufgeteilt werden, so dass pro Zeitpunkt nur ein Ereignis mit einer geringeren Anzahl an Steuersignalen ausgegeben werden muss. Die Breite der Ereignisse und damit die Menge der Daten, die von dem Mikrocontroller für jeden Zeitpunkt programmiert werden muss, wird somit erheblich reduziert, was der Belastung des Mikrocontrollers zugute kommt.

In der hier vorgeschlagenen Aufteilung ist der Haupt-Steuerbereich für die Ausgabe von Steuersignalen auf die Steuerleitungen zu der Funksteuereinheit verantwortlich. Außerdem kann der Haupt-Steuerbereich eingesetzt werden, um Steuerdaten für die Datenverarbeitung zur Verfügung zu stellen, die sich nicht direkt auf Bits innerhalb eines Datenpakets beziehen, für die also eine Synchronisierung mit eingehenden Daten nicht erforderlich ist. Es kann sich dabei beispielsweise um Steuersignale für das Ein- und Ausschalten von Synchronisationsfenstern handeln, was durchgeführt werden kann, bevor das erste Bit eines Datenpakets empfangen wurde. Der Zeitgeber 63 des Haupt-Steuerbereichs läuft ständig. Ansonsten kann der Haupt-Steuerbereich aber in Zeiten ohne Aktivitäten ausgeschaltet werden, um Energie zu sparen.

Der Sende-Steuerbereich steuert alle Datenverarbeitungsfunktionen, die von der Bitposition innerhalb eines zu sendenden Datenpakets abhängen. Er ist ausschließlich während der Übertragung von Datenpaketen aktiv und wird von dem Haupt-Steuerbereich über die Steuerleitung aktiviert, die das Ausgaberegister 64 des Haupt-Steuerbereichs mit dem Zeitgeber 53 des Sende-Steuerbereichs verbindet. Durch das Startsignal beginnt der Zeitgeber 53 entsprechend dem Takt der zu übertragenden Datenpakete zu laufen. Bei jedem Neustart beginnt der Sende-Steuerbereich das Auslesen wieder mit dem ersten gespeicherten Zeitpunkt und dem ersten Ereignis, nicht mit der letzten Zeigerposition vor dem Ausschalten.

Die Ereignisse des Sende-Steuerbereichs weisen ein Steuersignal auf, das über die Steuerleitung von dem Ausgaberegister 54 zu dem Zeitgeber 53 des Sende-Steuerbereichs übertragen wird und das geeignet ist, die Ausführung weiterer Befehle zu stoppen, bis eine erneute Aktivierung durch den Haupt-Steuerbereich erfolgt.

Der Empfangs-Steuerbereich steuert alle Datenverarbeitungsfunktionen, die von der Bitposition innerhalb eines empfangenen Datenpakets abhängen. Er ist ausschließlich beim Empfang von Datenpaketen aktiv geschaltet. Aktiviert wird der Empfangs-Steuerbereich entweder wie der Sende-Steuerbereich von einem Steuersignal des Haupt-Steuerbereichs oder aber durch ein Startsignal der Datenverarbeitungseinheiten, die für zu empfangende Pakete verantwortlich sind, wenn diese den Start eines Pakets detektieren, zum Beispiel durch die Detektion eines Synchronisationsfeldes (synchronisation field detection). Wie der Sende-Steuerbereich beginnt auch der Zeitgeber 43 des Empfangs-Steuerbereichs mit dem Startsignal zu laufen. Da der Empfangs-Steuerbereich aber mit den empfangenen Daten synchronisiert sein muss, erhält der Zeitgeber 43 einen Takt vorgegeben, der nicht von einem lokalen Taktgenerator stammt, sondern aus den empfangenen Daten gewonnen wird. Dadurch kann die Verarbeitung der Empfangsdaten unabhängig von der Systemtaktung erfolgen.

Der Empfangs-Steuerbereich beginnt das Auslesen ebenfalls bei jedem Neustart wieder mit dem ersten gespeicherten Zeitpunkt und dem ersten Ereignis. Auch hier kann eines der Steuersignale der eigenen Ereignisse den Empfangs-Steuerbereich über die Steuerleitung von dem Ausgaberegister 44 zu dem Zeitgeber 43 deaktivieren.

In allen drei Unterbereichen können Steuerleitungen auch dazu genutzt werden, um Unterbrechungsanforderungen (interrupts) an den Mikrocontroller auszugeben, so dass der Mikrocontroller die verschiedenen Unterbereiche synchron steuern kann.

Bei dem beschriebenen Ausführungsbeispiel benötigen der Empfangs-Steuerbereich und der Sende-Steuerbereich jeweils nur einen Zeitgeber 43,53, der lediglich die Länge eines einzigen Pakets umfasst. Diese Zeitgeber 43,53 können damit kürzer sein als der Systemzeitgeber 63, der von dem Haupt-Steuerbereich eingesetzt wird, wodurch sie weniger Speicherplatz und weniger Verarbeitungsenergie zum Berechnen und Schreiben brauchen. Außerdem weisen die im Empfangs-Steuerbereich und Sende-Steuerbereich vorgegebenen Zeitpunkte jeweils einen bestimmten Versatz gegenüber einer festen Position innerhalb eines Datenpakets auf, so dass sie von Änderungen der Systemtaktung unbeeinflusst bleiben. Diese Zeitpunkte und die zugehörigen Steuersignale können somit als statische Daten abgespeichert werden und brauchen nicht jedes Mal von dem Mikrocontroller neu berechnet zu werden, was die Verarbeitungslast noch weiter reduziert.

Sind die Registerarrays für die Befehle des Empfangs-Steuerbereichs und des Sende-Steuerbereichs groß genug, so können sämtliche Steuersignale für das gesamte Paketformat in diesen Arrays statisch gehalten werden. Das bedeutet, dass ein erneutes Laden während eines Datenverarbeitungsvorgangs nicht erforderlich ist und dass der Aufwand in dem Mikrocontroller nochmals reduziert wird.

## Patentansprüche

1. Steuereinheit (10) für ein Endgerät eines digitalen, schnurlosen Telekommunikations-systems zum Liefern von Steuersignalen an weitere Einheiten des Endgeräts mit:
- einem durch einen Mikrocontroller (3) mit verschiedenen aus Steuersignalen zusammengesetzten Ereignissen ladbaren Steuersignal-Registerarray (40,54,60), wobei von den Ereignissen jeweils ein Ereignis als aktuelles Ereignis ausgewählt ist,
- einem durch den Mikrocontroller (3) mit verschiedenen Zeitpunkten ladbaren Zeitpunkte-Registerarray (41,51,61), das geeignet ist, jeweils einen dem aktuellen Ereignis zugeordneten Zeitpunkt als aktuellen Zeitpunkt zur Verfügung zu stellen,
- einem Zeitgeber (43,53,63) zum Vorgeben einer Zeit entsprechend einer lokalen oder einer aus empfangenen Daten erhaltenen Taktung,
- einem Vergleicher (42,52,62) zum Vergleichen der von dem Zeitgeber (43,53,63) zur Verfügung gestellten Zeit mit dem von dem Zeitpunkte-Registerarray (41,51,61) zur Verfügung gestellten aktuellen Zeitpunkt, und
- einem von dem Vergleicher (42,52,62) angesteuerten und mit Steuerleitungen verbundenen Ausgaberegister (44,54,64), in das bei von dem Vergleicher (42,52,62) festgestelltem Übereinstimmen der von dem Zeitgeber (43,53,63) vorgegebenen Zeit mit dem aktuellen Zeitpunkt das aktuelle Ereignis schreibbar ist und das geeignet ist, die enthaltenen Steuersignale über die Steuerleitungen als Steuersignale für die weiteren Einheiten auszugeben, **dadurch gekennzeichnet, dass** die Steuereinheit mindestens zwei Unterbereiche umfasst, die jeweils ein Steuersignal-Registerarray (40,50,60), einen Zeitgeber (43,53,63), ein Zeitpunkte-Registerarray (41,51,61), einen Vergleicher (42,52,62) und ein Ausgaberegister (44,54,64) aufweisen, wobei die auszugebenden Steuersignale aufteilbar sind auf mindestens zwei Ereignisse, von denen jeweils eines von einem der Unterbereiche verarbeitbar ist.

2. Steuereinheit (10) nach Anspruch 1, **dadurch gekennzeichnet, dass** als Unterbereich mindestens ein Haupt-Steuerbereich zum Ausgeben von Steuersignalen, die sich nicht direkt auf Bits innerhalb eines Datenpakets beziehen, insbesondere von Steuersignalen für eine eine Funkschnittstelle steuernde Funksteuereinheit (2) und/oder für eine Datenverarbeitungseinheit (11), ein Empfangs-Steuerbereich zum Ausgeben von für die Verarbeitung von empfangenen Daten erforderlichen Steuersignalen in Echtzeit und ein Sende-Steuerbereich zum Ausgeben von für die Verarbeitung von zu sendenden Daten erforderlichen Steuersignalen in Echtzeit vorhanden ist.

3. Steuereinheit (10) nach Anspruch 1 oder 2, **dadurch gekennzeichnet, dass** jeder der Unterbereiche einen eigenen Zeitgeber (43,53,63) aufweist, der entweder entsprechend einer lokalen Taktvorgabe (55,65) oder entsprechend der Taktvorgabe eingehender Datenpakete (45) gesteuert wird.

4. Steuereinheit (10) nach einem der Ansprüche 1 bis 3, **dadurch gekennzeichnet, dass** ein erster der Unterbereiche geeignet ist, mindestens einen weiteren der Unterbereiche über ein in dem aktuellen Ereignis des ersten Unterbereichs vorgesehenes Steuersignal zu aktivieren und dass dieser mindestens eine weitere Unterbereich geeignet ist, sich selber über ein in dem aktuellen Ereignis des weiteren Unterbereichs vorgesehenes Steuersignal zu deaktivieren.

5. Steuereinheit (10) nach einem der voranstehenden Anspruche, **dadurch gekennzeichnet, dass** mindestens einer der eingesetzten Zeitgeber (43,53,63) als reiner Bitzähler ausgebildet ist.

6. Steuereinheit (10) nach einem der voranstehenden Anspruche, **dadurch gekennzeichnet, dass** sie zusammen mit einer Datenverarbeitungseinheit (11) zum Verarbeiten von empfangenen und von zu sendenden Daten in einer als Chip ausgebildeten Steuereinrichtung (1) integriert ist.

7. Endgerät eines schnurlosen Telekommunikationssystems, das eine Steuereinheit (10) gemäß einem der voranstehenden Anspruche aufweist.

8. Verfahren für eine Steuereinheit (10) eines Endgeräts eines schnurlosen Telekommunikationssystems zum Liefern von Steuersignalen an weitere Einheiten des Endgeräts, wobei die Steuereinheit (10) ein mit einem Ausgaberegister (44,54,64) verbundenes Steuersignal-Registerarray (40,50,60) sowie einen mit einem Zeitgeber (43,53,63) und einem Zeitpunkte-Registerarray (41,51,61) verbundenen Vergleicher (42,52,62) mit steuernden Zugang zu dem Ausgaberegister (44,54,64) aufweist, das die folgenden Schritte aufweist:
a) Schreiben verschiedener, Steuersignale enthaltender Ereignisse in das Steuersignal-Registerarray (40,50,60) durch einen Mikrocontroller (3),
b) Schreiben von jeweils einem Ereignis zugeordneten Zeitpunkten in das Zeitpunkte-Registerarray durch den Mikrocontroller (3),
c) Bestimmen des aktuellen Ereignisses und des dem aktuellen Ereignisses zugeordneten aktuellen Zeitpunkts,
d) Liefern des aktuellen Zeitpunkts an den Vergleicher (42,52,62),
e) ständiges Überprüfen in dem Vergleicher (42,52,62), ob der aktuellen Zeitpunkt mit einem kontinuierlich an den Vergleicher (42,52,62) gelieferten Zeitwert des Zeitgebers (43,53,63) übereinstimmt, und
f) bei Übereinstimmung, Laden des aktuellen Ereignisses in das Ausgaberegister (44,54,64) und Ausgabe der enthaltenen Steuersignale aus dem Ausgaberegister (44,54,64) auf angeschlossene Steuerleitungen, **dadurch gekennzeichnet, dass** die Steuereinheit mindestens zwei Unterbereiche umfasst, die jeweils ein Steuersignal-Registerarray (40,50,60), einen Zeitgeber (43,53,63), ein Zeitpunkte-Registerarray (41,51,61), einen Vergleicher (42,52,62) und ein Ausgaberegister (44,54,64) aufweisen, wobei die auszugebenden Steuersignale aufteilbar sind auf mindestens zwei Ereignisse, von denen jeweils eines von einem der Unterbereiche verarbeitbar ist.

## Claims

1. A control unit (10) for a terminal of a digital cordless telecommunication system for delivering control signals to further units of the terminal, including
- a control signal register array (40, 50, 60) that can be loaded by a microcontroller (3) with different events that are composed of control signals, one event from among said events being selected each time as the current event,
- an instant register array (41, 51, 61) that can be loaded with different instants by the microcontroller (3) and is designed to make available an instant that is associated with the current event as the current instant,
- a timer (43, 53, 63) for setting a time corresponding to a local clock generator or a clock extracted from data received,
- a comparator (42, 52, 62) for comparing the time presented by the timer (43, 53, 63) with the current instant presented by the instant register array (41,51, 61), and
- an output register (44, 54, 64) which is controlled by the comparator (42, 52, 62), which is connected to control leads, and in which the current event can be written upon a correspondence being detected by the comparator (42, 52, 62) between the time set by the timer (43, 53, 63) and said current instant, which output register is arranged to output the stored control signals via the control leads as control signals for the further units,
**characterized in that** the control unit comprises at least two sub-sections, each of which includes a respective control signal register array (40, 50, 60), a timer (43, 53, 63), an instant register array (41, 51, 61), a comparator (42, 52, 62), and an output register (44, 54, 64), wherein it is possible to divide the control signals to be output between at least two events, each one of which can be processed by a respective one of the sub-sections each time.

2. A control unit (10) as claimed in claim 1,
**characterized in that** sub-sections are provided in the form of at least a main control section for outputting control signals which do not relate directly to bits within a data packet, notably control signals for a radio control unit (2) controlling a radio interface and/or for a data processing unit (11), a receiving control section for outputting in real time control signals required for the processing of data received, and a transmission control section for outputting in real time control signals required for the processing of data to be transmitted.

3. A control unit (10) as claimed in claim 1 or 2,
**characterized in that** each of the sub-sections has its own timer (43, 53, 63) which is controlled either in conformity with a local clock generator (55, 65) or in conformity with the clock of incoming data packets (45).

4. A control unit (10) as claimed in any one of the claims 1 to 3,
**characterized in that** a first sub-section is arranged to activate at least one further sub-section via a control signal provided in the current event of the first sub-section, and that said at least one further sub-section is arranged to deactivate itself via a control signal provided in the current event of said further sub-section.

5. A control unit (10) as claimed in any one of the preceding claims,
**characterized in that** at least one of the timers (43, 53, 63) used is constructed as a pure bit counter.

6. A control unit (10) as claimed in any one of the preceding claims,
**characterized in that** it is integrated together with a data processing unit (11) for the processing of data to be received and transmitted in a control device (1) that is constructed as a chip.

7. A terminal of a cordless telecommunication system which includes a control unit (10) as claimed in any one of the preceding claims.

8. A method for a control unit (10) for a terminal of a cordless telecommunication system for delivering control signals to further units of the terminal, the control unit (10) including a control signal register array (40, 50, 60) which is connected to an output register (44, 54, 64) as well as a comparator which is connected to a timer (43, 53, 63) and to an instant register array (41, 51, 61) with controlling access to the output register (44, 54, 64), which method includes the following steps:
a) writing of different events, comprising control signals, into the control signal register array (40, 50, 60) by means of a microcontroller (3),
b) writing of instants, each associated with a respective event, into the instant register array by means of the microcontroller (3),
c) determining of the current event and the current instant associated with the current event,
d) applying of the current instant to the comparator (42, 52, 62),
e) continuous checking in the comparator (42, 52, 62) as to whether the current instant corresponds to a time value of the timer (43, 53, 63) that is continuously applied to the comparator (42, 52, 62), and
f) in the case of correspondence, loading of the current event into the output register (44, 54, 64) and outputting of the control signals contained therein from the output register (44, 54, 64) to connected control leads,
**characterized in that** the control unit comprises at least two sub-sections, each of which includes a respective control signal register array (40, 50, 60), a timer (43, 53, 63), an instant register array (41, 51, 61), a comparator (42, 52, 62), and an output register (44, 54, 64), wherein it is possible to divide the control signals to be output between at least two events, each one of which can be processed by a respective one of the sub-sections each time.

## Revendications

1. Unité de commande (10) pour un appareil terminal d'un système de télécommunications numérique sans fil pour la délivrance de signaux de commande à d'autres unités de l'appareil terminal avec :
- un registre de signaux de commande (40, 54, 60) chargeable par un microcontrôleur (3) avec différents événements réunis à partir de signaux de commande, dans lequel, parmi les événements, respectivement un événement est choisi comme événement actuel,
- un registre de points temporels pouvant être chargé par le microcontrôleur (3) en points temporels différents, registre de points temporels (41, 51, 61) qui est apte, respectivement, à mettre à disposition un point temporel affecté à l'événement actuel en tant que point temporel actuel,
- une horloge (43, 53, 63) pour l'indication d'un temps correspondant à une synchronisation locale ou à partir d'une synchronisation à partir de données reçues,
- un comparateur (42, 52, 62) pour la comparaison du temps mis à disposition par l'horloge (43, 53, 63) avec le point temporel actuel mis à disposition par le registre de points temporels (41, 51, 61), et
- un registre d'émission (44, 54, 64) piloté par le comparateur (42, 52, 62) et relié aux conduites de commande, dans lequel, en cas de coïncidence constatée par le comparateur (42, 52, 62) du temps fourni par l'horloge (43, 53, 63) avec le point temporel actuel, s'inscrit l'événement actuel et qui est apte à émettre les signaux de commande reçus par l'intermédiaire des conduites de commande en tant que signaux de commande pour les autres unités, **caractérisé en ce que** l'unité de commande comprend au moins deux zones secondaires qui, respectivement, présentent un registre de signaux de commande (40, 50, 60), une horloge (43, 53, 63), un registre de points temporels (41, 51, 61), un comparateur (42, 52, 62) et un registre d'émission (44, 54, 64), de sorte que les signaux de commande émis peuvent être répartis en au moins deux événements dont respectivement un événement peut être traité par l'une des zones secondaires.

2. Unité de commande (10) selon la revendication 1, **caractérisée en ce qu'**en tant que zone secondaire, on dispose d'au moins une zone de commande principale pour l'émission de signaux de commande qui ne se rapportent pas directement aux bits à l'intérieur d'un paquet de données, en particulier de signaux de commande pour une unité de commande radio (2) commandant une interface radio et/ou pour une unité de traitement de données (11), une zone de commande de réception pour l'émission de signaux de commande nécessaires pour le traitement des données reçues en temps réel et une zone de commande d'émission pour émettre les signaux de commande nécessaires pour le traitement des données à envoyer en temps réel.

3. Unité de commande (10) selon la revendication 1 ou 2, **caractérisée en ce que** chacune des zones secondaires présente une horloge propre (43, 53, 63) qui est commandée soit en fonction d'une temporisation locale (55, 65), soit en fonction de la temporisation de paquets de données arrivants (45).

4. Unité de commande (10) selon l'une des revendications 1 à 3, **caractérisée en ce qu'**une première des zones secondaires est apte à activer au moins une autre des zones secondaires par l'intermédiaire d'un signal de commande prévu dans l'événement actuel de la première zone secondaire, et **en ce qu'**au moins une autre zone secondaire se désactive par l'intermédiaire d'un signal de commande prévu dans l'événement actuel de l'autre zone secondaire.

5. Unité de commande (10) selon l'une des revendications précédentes, **caractérisée en ce qu'**au moins l'une des horloges concernées (43, 53, 63) est conçue en tant que simple compteur de bits.

6. Unité de commande (10) selon l'une des revendications précédentes, **caractérisée en ce qu'**elle est intégrée avec une unité de traitement de données (11) pour le traitement de données reçues et de données à envoyer dans un dispositif de commande (1) conçu sous forme de puce.

7. Appareil terminal d'un système de télécommunications sans fil qui présente une unité de commande (10) selon l'une des revendications précédentes.

8. Procédé pour une unité de commande (10) d'un appareil terminal d'un système de télécommunications sans fil pour la fourniture de signaux de commande à d'autres unités de l'appareil terminal, dans lequel l'unité de commande (10) présente un registre de signaux de commande (40, 50, 60) raccordé à un registre d'émission (44, 54, 64), ainsi qu'un comparateur raccordé à une horloge (43, 53, 63) et un registre de points temporels (41, 51, 61) avec l'accès de commande au registre d'émission (44, 54, 64) qui présente les étapes suivantes :
a) écriture de différents événements contenant des signaux de commande dans le registre de signaux de commande (40, 50, 60) par un microcontrôleur (3),
b) écriture de respectivement des points temporels affectés à un événement dans le registre de points temporels par le microcontrôleur (3),
c) détermination de l'événement actuel et du point temporel actuel affecté à l'événement actuel,
d) fourniture du point temporel actuel au comparateur (42, 52, 62),
e) vérification constante dans le comparateur (42, 52, 62) si le point temporel actuel coïncide à une valeur temps fournie continuellement au comparateur (42, 52, 62) de l'horloge (43, 53, 63), et
f) en cas de coïncidence, chargement de l'événement actuel dans le registre d'émission (44, 54, 64) et émission du signal de commande reçu en provenance du registre d'émission (44, 54, 64) sur les lignes de commande raccordées, **caractérisé en ce que** l'unité de commande comprend au moins deux zones secondaires qui, respectivement, présentent un registre de signaux de commande (40, 50, 60), une horloge (43, 53, 63), un registre de points temporels (41, 51, 61), un comparateur (42, 52, 62) et un registre d'émission (44, 54, 64), tandis que les signaux de commande à émettre peuvent être répartis sur au moins deux événements, dont respectivement un événement peut être traité par l'une des zones secondaires.
